# EUROPÄISCHE PATENTSCHRIFT

(11) **EP 1 878 671 B1**
(45) Veröffentlichungstag und Bekanntmachung des Hinweises auf die Patenterteilung: **06.10.2010**
(21) Anmeldenummer: 06405298.8
(22) Anmeldetag: 11.07.2006
(51) Int. Cl.: B65D 75/00, B29C 65/00

(54) **Verpackungsbeutel**
Packaging bag
Sachet d'emballage

(43) Veröffentlichungstag der Anmeldung: 16.01.2008
(73) Patentinhaber: 3A Technology & Management AG, 8212 Neuhausen am Rheinfall (CH)
(72) Erfinder: Holzwarth, Gunther, 8212 Neuhausen (CH); Bevilacqua, Markus, 8213 Neunkirch (CH); Jammet, Jean-Claude, 8212 Neuhausen (CH)

(56) Entgegenhaltungen:
- EP-A- 0 792 735
- EP-A2- 0 386 701
- FR-A1- 2 715 383
- JP-A- 9 142 416
- JP-A- 55 154 118
- US-A- 3 380 646

## Beschreibung

Die Erfindung betrifft einen Verpackungsbeutel nach dem Oberbegriff des Anspruchs 1.

Ein solcher Beutel ist in JP 55 154118 A offenbart.

Güter des täglichen Bedarfs werden oft in Beutel abgepackt. Ein klassisches Beutelsystem ist der Stand beutel bzw. die "Doy-Pack" Beutelform. Je nach Füllgut und Anforderungen werden dazu Materialaufbauten mit zwei bis vier Hauptschichten verwendet.

Typische Schichtaufbauten von Verpackungslaminaten zur Herstellung von Beuteln für flüssige, flüssig/stückige und pastöse Füllgüter mit einer langen Haltbarkeit von mehr als dreissig Tagen sind beispielsweise
PET / Aluminium / oPA / PE (oder PP)
PET / vakuumbeschichtete Barriere / oPA / PE (oder PP)
PET / vakuumbeschichtete Barriere / PET / PE (oder PP)
PET / PE :EVOH:PE (oder PP:EVOH:PP)

Die Kombination der verschiedenen Schichten führt zu den gewünschten Eigenschaften. PET (Polyethylenterephthalat) ist thermoresisitent, ergibt eine glänzende Oberfläche und ist gut bedruckbar, oPA (orientiertes Polyamid) führt zu einer hohen Durchstossfestigkeit und Knickbruchbeständigkeit, eine Aluminiumfolie, eine Vakuumbeschichtung mit SiOₓ oder eine Schicht aus EVOH (Ethyl-Vinyl-Alkohol) als Barriereschicht erhöht die Durchtrittssperrwirkung gegen Wasserdampf, Sauerstoff und andere Gase sowie Fremdaromen. Die Dicken der einzelnen Schichten variieren je nach Anwendungsfall. Typische Filmschichtdicken sind: PET 12 µm, Aluminium 8 - 12 µm, oPA 12 - 15 µm, PE und PP 50 - 150 µm. Die Filme bzw. Folien werden typischerweise mit Polyurethan-Klebstoffen verklebt.

Die Kombination der Schichten führt neben anderen mechanischen Eigenschaften auch zu der erforderlichen Zähigkeit der Siegeinahtverbindung, die dem fertigen Beutel die Form gibt. Dadurch wird verhindert, dass der Beutel bei einem Sturz aufplatzt und das Füllgut unbrauchbar wird.

Die Herstellung der erwähnten Schichtkombinationen ist vergleichsweise komplex. Es besteht daher der Wunsch nach einfacher herzustellenden, kostengünstigen und weniger Schichten, z.B. nur zwei Hauptschichten, umfassenden Laminaten. Die eingesetzten Materialien müssen verschiedene Eigenschaften in sich vereinigen, hauptsächlich aber verhindern, dass der fertige Beutel nach mehreren Stürzen entlang der Siegelnähte reisst.

Der Erfindung liegt die Aufgabe zugrunde, das Schockabsorptionsvermögen der Siegelnaht bei einem Verpackungsbeutel der eingangs genannten Art zu verbessern.

Zur erfindungsgemässen Lösung der Aufgabe führt ein Verpackungsbeutel mit den Merkmalen des Anspruchs 1.

Der Kern der Erfindung liegt in der Anordnung eines zusätzlichen Siegelbereiches, der die bei einem Sturz eines Beutels auf die Siegelzone einwirkende Energie aufnimmt bzw. so weit vermindert, dass die äussere Siegelnaht nicht beeinträchtigt wird. Ein bei einem Sturz eines Beutels in dem der äusseren Siegelnaht vorgelagerten Bereich der Siegelzone mit der geringsten Haftfestigkeit ausgehender Riss wird durch Aufnahme der in die Siegelzone eingeleiteten kinetischen Energie durch plastische Verformung gestoppt, bevor der Riss die äussere Siegelnaht erreicht.

Der an das Beutelinnere angrenzende Bereich der Siegelzone weist eine Vielzahl von in gegenseitigem Abstand angeordneten Siegelflächen mit gegenüber der Haftfestigkeit der äusseren Siegelnaht gleicher oder geringerer Haftfestigkeit auf.

Die in gegenseitigem Abstand angeordneten Siegelflächen sind von einem inneren Rand der äusseren Siegelnaht gegen das Beutelinnere abragende oder von einem inneren Rand der äusseren Siegelnaht nach innen einragenden siegelfreien Bereichen begrenzte Streifen.

Der an das Beutelinnere angrenzende Bereich der Siegelzone mit der gegenüber der äusseren Siegelnaht geringeren Haftfestigkeit kann über die gesamte Länge oder auch nur über eine oder mehrere Teillängen der äusseren Siegelnaht verlaufen.

Weitere Vorteile, Merkmale und Einzelheiten ergeben sich aus der nachfolgenden Beschreibung bevorzugter Ausführungsbeispiele sowie anhand der Zeichnung; diese zeigt schematisch in
- - Fig. 1: eine Seitenansicht eines nicht erfindungsgemässen Standbeutels mit äusserer und innerer Siegelnaht;
- - Fig. 2: die Seitenansicht des Standbeutels von Fig. 1 mit äusserer Siegelnaht und inneren, in Abstand zueinander angeordneten Siegelflächen.

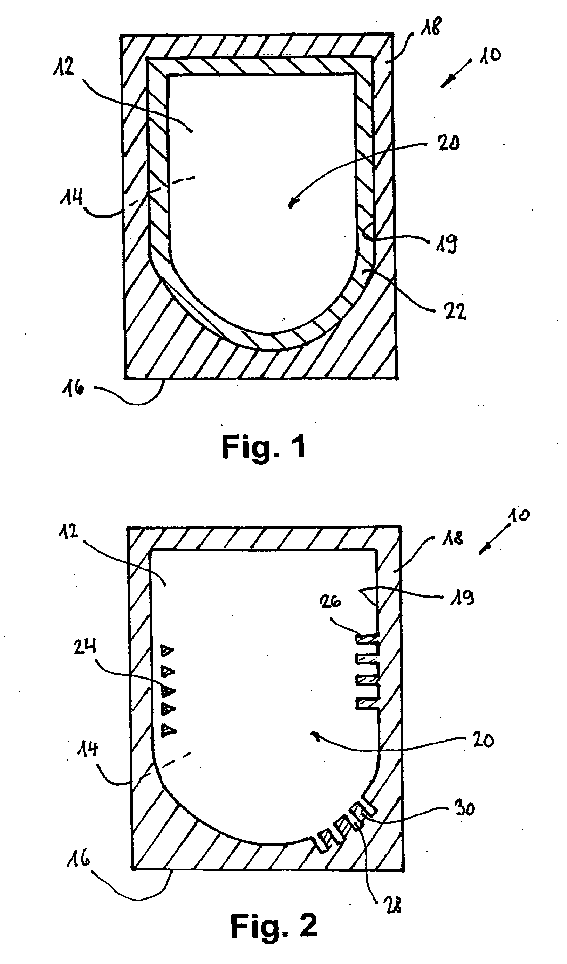

Ein in Fig. 1 dargestellter, nicht erfindungsgemässer Verpackungsbeutel 10 in Form eines Standbeutels weist eine Vorderwand 12, eine Rückwand 14 und einen eingesiegelten Boden 16 auf. Eine umlaufende äussere Siegelnaht 18 mit hoher Haftfestigkeit schliesst ein von Vorderwand 12, Rückwand 14 und Boden 16 begrenztes Füllgutvolumen 20 gegen die Umgebungsatmosphäre hermetisch ab.

An einen inneren Rand 19 der äusseren Siegelnaht 18 schliesst eine an das Füllgutvolumen 20 angrenzende innere Siegelnaht 22 mit einer gegenüber der äusseren Siegelnaht 18 geringeren Haftfestigkeit an und erstreckt sich über die gesamte Länge der äusseren Siegelnaht 18.

Ein bei einem Sturz des Beutels auftretender Riss entsteht in der inneren Siegelnaht und wird in dieser durch Energieabsorption gestoppt. Die Haftfestigkeit der inneren Siegelnaht 22 kann z.B. so eingestellt werden, dass eine Trennung der inneren Siegelnaht 22 durch Peelen erfolgt.

Wie in Fig. 2 gezeigt, kann eine verminderte Haftfestigkeit an der Innenseite der äusseren Siegelnaht 18 auch dadurch erreicht werden, dass die Siegelung in diesem Bereich anstelle einer vollflächigen Siegelnaht von einer Vielzahl von in gegenseitigem Abstand angeordneten Siegelflächen gebildet sein können.

Die beispielhaft gezeigten Siegelflächen sind in einer ersten, nicht erfindungsgemässen Ausführungsform geometrische Elemente, z.B. Dreiecke 24, die von siegelfreien Bereichen umgeben sind.

In einer zweiten, erfindungsgemässen Ausführungsform sind die in gegenseitigem Abstand angeordneten Siegelflächen vom inneren Rand 19 der äusseren Siegelnaht 18 gegen das Beutelinnere 20 abragende Streifen 26.

In einer dritten, erfindungsgemässen Ausführungsform sind die in gegenseitigem Abstand angeordneten Siegelflächen vom inneren Rand 19 der äusseren Siegelnaht 18 nach innen einragenden siegelfreien Bereichen 28 begrenzte Streifen 30.

## Patentansprüche

1. Verpackungsbeutel aus einem flexiblen Folienmaterial mit wenigstens einer entlang eines Beutelrandes angeordneten Siegelzone mit einer äusseren Siegelnaht (18) als permanentes Verschliesselement, wobei zur Erhöhung des Schockabsorptionsvermögens der Siegelzone ein an das Beutelinnere (20) angrenzender Bereich der Siegelzone eine gegenüber der Haftfestigkeit der äusseren Siegelnaht (18) geringere Haftfestigkeit in Form einer Vielzahl von in gegenseitigem Abstand angeordneten Siegelflächen mit gegenüber der Haftfestigkeit der äusseren Siegelnaht (18) gleicher oder geringerer Haftfestigkeit aufweist,
**dadurch gekennzeichnet, dass**
die in gegenseitigem Abstand angeordneten Siegelflächen von einem Inneren Rand (19) der äusseren Siegelnaht (18) gegen das Beutelinnere abragende Streifen (26) oder von einem inneren Rand (19) der äusseren Siegelnaht (18) nach innen einragenden siegelfreien Bereichen (28) begrenzte Streifen (30) sind.

2. Verpackungsbeutel nach Anspruch 1, **dadurch gekennzeichnet, dass** der an das Beutelinnere angrenzende Bereich der Siegelzone mit der gegenüber der äusseren Siegelnaht (18) geringeren Haftfestigkeit über die gesamte Länge der äusseren Siegelnaht (18) verläuft.

3. Verpackungsbeutel nach Anspruch 1, **dadurch gekennzeichnet, dass** der an das Beutelinnere angrenzende Bereich der Siegelzone mit der gegenüber der äusseren Siegelnaht (18) geringeren Haftfestigkeit über wenigstens eine Teillänge der äusseren Siegelnaht (18) verläuft.

## Claims

1. Packaging bag made from a flexible film material, comprising at least one sealing region arranged along a bag edge and comprising an outer sealing seam (18) as a permanent sealing member, an area of the sealing region adjacent to the interior (20) of the bag having a bond strength, lower than that of the outer sealing seam (18), in the form of a plurality of mutually spaced sealing surfaces having a bond strength equal to or lower than that of the outer sealing seam (18), in order to increase the shock-absorbing capacity of the sealing region,
**characterised in that**
the mutually spaced sealing surfaces are strips (26) projecting from an inner edge (19) of the outer seam (18) towards the interior of the bag, or strips (30) delimited by seal-free areas (28) projecting inwards from an inner edge (19) of the outer sealing seam (18).

2. Packaging bag according to claim 1, **characterised in that** the area of the sealing region adjacent to the interior of the bag and having a bond strength lower than that of the outer sealing seam (18) extends along the entire length of the outer sealing seam (18).

3. Packaging bag according to claim 1, **characterised in that** the area of the sealing region adjacent to the interior of the bag and having a bond strength lower than that of the outer sealing seam (18) extends along at least a part of the length of the outer sealing seam (18).

## Revendications

1. Sachet d'emballage en un matériau flexible sous forme de feuille, présentant au moins une zone de scellement agencée le long d'un bord du sachet et comprenant un joint de scellement extérieur (18) en tant qu'élément de fermeture permanent, sachet dans lequel pour augmenter la capacité d'absorption de choc de la zone de scellement, un secteur de la zone de scellement, qui est adjacent à l'espace intérieur (20) du sachet, présente une résistance d'adhésion moindre que la résistance d'adhésion du joint de scellement extérieur (18), et se présente sous la forme d'un grand nombre de surfaces de scellement agencées en étant espacées réciproquement et ayant, par rapport à la résistance d'adhésion du joint de scellement extérieur (18), une résistance d'adhésion identique ou moindre,
**caractérisé**
**en ce que** les surfaces de scellement agencées en étant espacées réciproquement sont, soit des bandes (26) issues d'un bord intérieur (19) du joint de scellement extérieur (18) et faisant saillie vers l'espace intérieur du sachet, soit des bandes (30) délimitées par des zones (28) qui sont exemptes de scellement et qui s'étendent d'un bord intérieur (19) du joint de scellement extérieur (18) vers l'intérieur de ce dernier.

2. Sachet d'emballage selon la revendication 1, **caractérisé en ce que** le secteur de la zone de scellement, qui est adjacent à l'espace intérieur du sachet et présente une résistance d'adhésion moindre que la résistance d'adhésion du joint de scellement extérieur (18), s'étend sur toute la longueur du joint de scellement extérieur (18).

3. Sachet d'emballage selon la revendication 1, **caractérisé en ce que** le secteur de la zone de scellement, qui est adjacent à l'espace intérieur du sachet et présente une résistance d'adhésion moindre que la résistance d'adhésion du joint de scellement extérieur (18), s'étend sur au moins une partie de la longueur du joint de scellement extérieur (18).
